# EUROPEAN PATENT APPLICATION

(11) **EP 4 212 231 A1**
(43) Date of publication of application: **19.07.2023**
(21) Application number: 21866692.3
(22) Date of filing: 03.09.2021
(51) Int. Cl.: B01D 53/04, B01D 53/72, B01D 53/82, B01J 20/18, B01J 20/20, C01B 32/30

(54) **ORGANIC SOLVENT RECOVERY SYSTEM**

(30) Priority: 11.09.2020 JP 2020152927
(71) Applicant: TOYOBO CO., LTD., Osaka-shi Osaka 5300001 (JP)
(72) Inventor: TATEYAMA, Samu, Otsu-shi, Shiga 520-0292 (JP); HAYASHI, Toshiaki, Osaka-shi, Osaka 530-8230 (JP); OKADA, Takemasa, Otsu-shi, Shiga 520-0292 (JP)
(74) Representative: Vossius & Partner Patentanwälte Rechtsanwälte mbB
(86) International application number: PCT/JP2021/032561
(87) International publication number: WO 2022/054733

(57) **Abstract**

An organic solvent recovery system in the present invention includes an organic solvent recovery apparatus that performs an adsorption treatment to adsorb an organic solvent in a treatment target gas in a plurality of first treatment tanks connected in a series multi-stage configuration and a desorption treatment in one of the first treatment tanks that is selected in sequence, and an organic solvent concentrator apparatus that performs an adsorption and desorption treatment and a desorption treatment in second treatment tanks, the start of the desorption treatment is performed in the selected one of the first treatment tanks and the second treatment tank at the same time.

## Description

### TECHNICAL FIELD

The present invention relates to an organic solvent recovery system that recovers an organic solvent from an organic solvent-containing gas.

### BACKGROUND ART

As a system that recovers an organic solvent from an organic solvent-containing gas, for example, PTL 1 discloses a gas treatment apparatus including three treatment tanks that have an adsorption agent. In this gas treatment apparatus, an adsorption process is continuously executed in two treatment tanks, and during that time, a desorption process is executed in the remaining treatment tank. A diluent gas is supplied for drying the adsorption material in the treatment tank after the desorption process.

Further, PTL 2 discloses an organic solvent recovery system including a first adsorption/desorption apparatus that has two treatment tanks and a second adsorption/desorption apparatus that recovers an organic solvent contained in a treatment target gas discharged from the first adsorption/desorption apparatus. The second adsorption/desorption apparatus includes a first treatment unit that adsorbs the organic solvent contained in the treatment target gas, with a second adsorption/desorption element, and a second treatment unit that desorbs the organic solvent adsorbed by the second adsorption/desorption element, from the second adsorption/desorption element.

In the gas treatment apparatus described in PTL 1, the removal ratio of the organic solvent is increased because the adsorption process is continuously executed in the two treatment tanks, and in the organic solvent recovery system described in PTL 2, the removal ratio of the organic solvent is increased because the adsorption process is continuously executed in one treatment tank of the first adsorption/desorption apparatus and the first treatment unit of the second adsorption/desorption apparatus.

### CITATION LIST

### PATENT LITERATURE

PTL 1: Japanese Patent Laying-Open No. 2014-147863
PTL 2: Japanese Patent Laying-Open No. 2014-240052

### SUMMARY OF INVENTION

### TECHNICAL PROBLEM

In recent years, in the organic solvent recovery system, there has been a need to further increase the removal ratio of the organic solvent. In response to this need, the inventors have studied a system that further executes the adsorption process with the second adsorption/desorption apparatus described in PTL 2 after continuously executing the adsorption process in the two treatment tanks described in PTL 1, and returns the gas containing the desorbed organic solvent from the second adsorption/desorption apparatus to the treatment target gas (original gas) in the treatment tank.

However, in the above studied system, vapor mist (referred to as white smoke, hereinafter) generated immediately after the switching between the adsorption process and the desorption process in the treatment tank is mixed in the treatment target gas discharged from the treatment tank of the first adsorption/desorption apparatus and supplied to the second adsorption/desorption apparatus, for a few tens of seconds. When the high-temperature high-humidity treatment target gas containing the white smoke is supplied to the second adsorption/desorption apparatus in a state where a certain amount or more of organic solvent has been adsorbed in the second adsorption/desorption apparatus (that is, in a state where the adsorption process in the second adsorption/desorption apparatus has been performed to some extent), there is a problem in that the adsorption speed of the organic solvent decreases due to the rise in the temperature of the treatment target gas and the adsorption of moisture to the second adsorption/desorption apparatus and the organic solvent gas is discharged by equal to or more than the designed outlet concentration of the second adsorption/desorption apparatus. Further, the adsorption of moisture due to the white smoke causes the increase in the thermal energy required for the desorption process in the second adsorption/desorption apparatus.

As a measure against such influences of the white smoke, the cooling or dehumidification of the treatment target gas to be supplied to the second adsorption/desorption apparatus has been studied, but cooling cost increases. Further, against the decrease in adsorption speed, a measure of increasing the layer length of the adsorption material has been studied, but the amount of the adsorption material increases, so that the size of the apparatus increases.

Hence, the present invention has been made in view of the above problems, and an object thereof is to provide an organic solvent recovery system that allows cost restraint, size increase restraint and energy restraint.

### SOLUTION TO PROBLEM

As a result of keen study, the inventors have found that the above problems can be solved by means shown below, and have reached the present invention. That is, the present invention has the following configurations.
1. An organic solvent recovery system comprising: three or more first treatment tanks that are filled with a first adsorption material capable of adsorbing and desorbing an organic solvent; a water vapor supply flow channel through which water vapor is introduced; a coupling flow channel that connects a plurality of the first treatment tanks in a series multi-stage configuration; and a treatment target gas supply flow channel through which a treatment target gas containing the organic solvent is supplied, and comprising:
   an organic solvent recovery apparatus that performs an adsorption treatment of the organic solvent contained in the supplied treatment target gas in the plurality of the first treatment tanks of all of the first treatment tanks that is connected in the series multi-stage configuration, discharges a first treated gas, and performs a desorption treatment of the adsorbed organic solvent in a remaining first treatment tank using the introduced water vapor, all of the first treatment tanks continuously performing the adsorption treatment and the desorption treatment with switching between the adsorption treatment and the desorption treatment; and
   an organic solvent concentrator apparatus including second treatment tanks that are filled with a second adsorption material capable of adsorbing and desorbing the organic solvent and a feed flow channel through which the first treated gas is supplied to the second treatment tanks, an adsorption treatment and a desorption treatment of the organic solvent contained in the first treated gas being continuously performed with switching between the adsorption treatment and the desorption treatment,
   in which the switching between the desorption treatment and the adsorption treatment in the first treatment tanks and the switching between the desorption treatment and the adsorption treatment in the second treatment tanks are performed at the same time.
2. The organic solvent recovery system according to the above 1, comprising: a diluent gas supply flow channel through which a diluent gas is supplied to the coupling flow channel; and a return flow channel through which a desorbed gas discharged by the desorption treatment in the second treatment tanks is returned to the diluent gas supply flow channel.
3. The organic solvent recovery system according to the above 1 or 2, comprising: a connection flow channel through which some of a second treated gas discharged by the adsorption treatment in the second treatment tanks is introduced for the desorption treatment in the second treatment tanks; and a heating device that is provided in the connection flow channel.
4. The organic solvent recovery system according to any one of the above 1 to 3, wherein the second adsorption material is composed of a material containing at least one of granular activated carbon, activated carbon fiber or zeolite.
5. The organic solvent recovery system according to any one of the above 1 to 4, wherein heated air is used for the desorption treatment by the second adsorption material.

### ADVANTAGEOUS EFFECTS OF INVENTION

By the present invention, the switching between the desorption treatment and the adsorption treatment in the treatment tanks of the organic solvent recovery apparatus at the former stage and the switching between the desorption treatment and the adsorption treatment in the treatment tank of the organic solvent concentrator apparatus at the latter stage are performed at the same time, and thereby, it is possible to secure the layer length of the adsorption material that is not saturated with the organic solvent, against the decrease in the adsorption speed due to the moisture adsorption caused by the white smoke inflow to the organic solvent concentrator apparatus at the latter stage. Therefore, it is possible to restrain the organic solvent from being mixed in a treated gas (purified gas) that is treated and discharged by the organic solvent concentrator apparatus. Further, by the entry of the white smoke shortly after the start of the adsorption process in the organic solvent concentrator apparatus, the time to dry the adsorption material by the ventilation with the treatment target gas after the white smoke disappears is maximized, and therefore, it is possible to decrease the energy required for the desorption treatment, compared to the related art.

### BRIEF DESCRIPTION OF DRAWINGS

Fig. 1 is a diagram showing the configuration of an organic solvent recovery system in an embodiment of the present invention.
Fig. 2 is a table showing organic solvent (dichloromethane) concentrations of treatment target gases, removal ratios of an organic solvent (dichloromethane), and utility amounts of a coolant and a vapor amount in an example and a comparative example.

### DESCRIPTION OF EMBODIMENTS

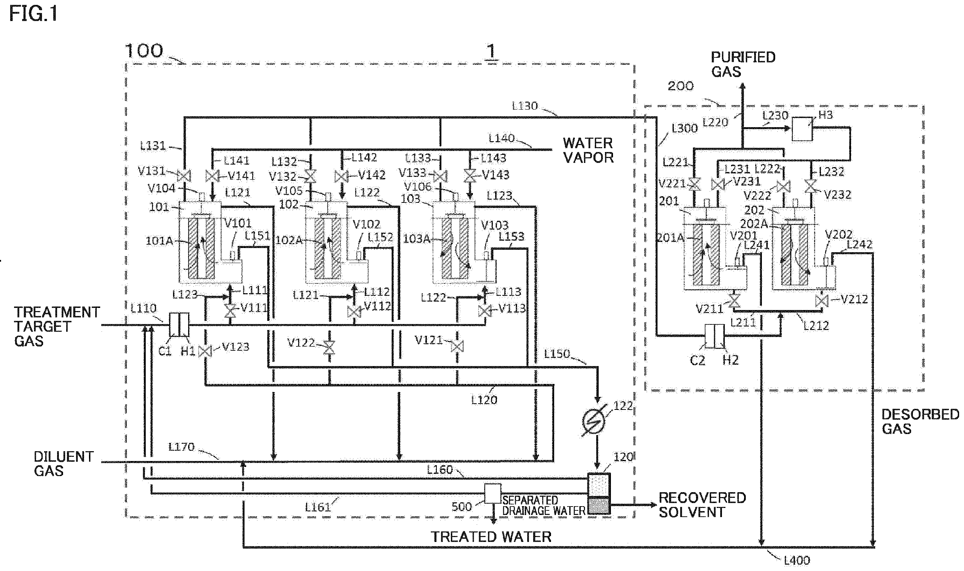

With reference to Fig. 1, embodiments of the present invention will be described below in detail.

### (Embodiment 1)

Fig. 1 is a diagram schematically showing the configuration of an organic solvent recovery system 1 in an embodiment of the present invention. Organic solvent recovery system 1 includes an organic solvent recovery apparatus 100 and an organic solvent concentrator apparatus 200. Further, a feed flow channel L300 and a return flow channel L400 are included.

After organic solvent recovery system 1 performs the removal and recovery of an organic solvent from a treatment target gas containing the organic solvent in organic solvent recovery apparatus 100, organic solvent recovery system 1 further performs the removal and concentration of the organic solvent to a first treated gas discharged from organic solvent recovery apparatus 100, in organic solvent concentrator apparatus 200, and discharges a second treated gas (purified gas). Furthermore, a desorbed gas after desorption is returned from organic solvent concentrator apparatus 200 to organic solvent recovery apparatus 100 through return flow channel L400. Organic solvent recovery system 1 performs the switching between the desorption treatment (desorption process) and the adsorption treatment (adsorption process), in each treatment tank of organic solvent recovery apparatus 100 and organic solvent concentrator apparatus 200, at the same time. The same time includes almost the same time.

Each constitution of organic solvent recovery system 1 will be described below.

Organic solvent recovery apparatus 100 is an apparatus that removes and recovers the organic solvent from the treatment target gas. The treatment target gas is supplied from a treatment target gas supply source provided in the system exterior of organic solvent recovery apparatus 100, to organic solvent recovery apparatus 100. Organic solvent recovery apparatus 100 includes three first treatment tanks 101 to 103, a treatment target gas supply flow channel L110, coupling flow channels L121 to L123, takeoff flow channels L131 to L133, water vapor supply flow channels L141 to L143, organic solvent recovery flow channels L151 to L153, a separator 120, a resupply flow channel L160, and a diluent gas supply flow channel L170.

First treatment tanks 101 to 103 include first adsorption materials 101A to 103A that allow the adsorption of the organic solvent and the desorption of the organic solvent. As first adsorption materials 101A to 103A, there are granular activated carbon and zeolite, honeycomb activated carbon and zeolite, activated carbon fiber, and the like, and a material composed of activated carbon fiber is preferable. First treatment tanks 101 to 103 include opening-closing dampers V101 to V103 that switch the supply/non-supply of the treatment target gas to treatment target gas supply ports and opening-closing dampers V104 to V106 that switch the discharge/non-discharge of treated gas discharge ports after the passing through first adsorption materials 101A to 103A.

In first treatment tanks 101 to 103, the adsorption of the organic solvent by first adsorption materials 101A to 103A and the desorption of the organic solvent from first adsorption materials 101A to 103A are alternately performed. That is, a first adsorption process (adsorption treatment) of adsorbing the organic solvent from the treatment target gas supplied from the treatment target gas supply source and discharging a first post-adsorption gas is performed in one first treatment tank of three first treatment tanks 101 to 103, a second adsorption process (adsorption treatment) of a adsorbing the organic solvent from the first post-adsorption gas and discharging a first treated gas is performed in another first treatment tank connected in a series multi-stage configuration with the first treatment tank in which the first adsorption treatment is performed, and during that time, a desorption process (desorption treatment) of desorbing the organic solvent from the first adsorption material is performed in the remaining one first treatment tank. In first treatment tanks 101 to 103, the desorption process, the second adsorption process and the first adsorption process are repeatedly performed in this order with switching.

Treatment target gas supply flow channel L110 is a flow channel for supplying the treatment target gas to first treatment tanks 101 to 103. An upstream-side end portion of treatment target gas supply flow channel L110 is connected to the treatment target gas supply source. A cooler C1 and heater H1 for adjusting the temperature and humidity of the treatment target gas to flow into first treatment tanks 101 to 103 are provided in treatment target gas supply flow channel L110.

Treatment target gas supply flow channel L110 includes branch flow channels L111 to L113 through which the treatment target gas is supplied to first treatment tanks 101 to 103. An opening-closing valve V111 is provided in branch flow channel L111. An opening-closing valve V112 is provided in branch flow channel L112. An opening-closing valve V113 is provided in branch flow channel L113.

Coupling flow channels L121 to L123 are coupled such that the treatment target gas after the organic solvent is adsorbed in the first adsorption material of one first treatment tank (the first treatment tank that is used in the first adsorption process) of three first treatment tanks 101 to 103 is introduced into the treatment target gas supply port of another first treatment tank (the treatment tank that is used in the second adsorption process) different from the one first treatment tank of three first treatment tanks 101 to 103.

Coupling flow channels L121 to L123 include L120 where coupling flow channels L121 to L123 join each other. An opening-closing valve V121 is provided at site of first coupling flow channel L121 that rebranches from joining channel L120. An opening-closing valve V122 is provided at site of second coupling flow channel L122 that rebranches from joining channel L120. An opening-closing valve V123 is provided at site of third coupling flow channel L123 that rebranches from joining channel L120.

Takeoff flow channels L131 to L133 are flow channels for taking off the first treated gas that is a treated gas after the adsorption treatment in first treatment tanks 101 to 103. Takeoff flow channels L131 to L133 are connected to the treated gas discharge ports of first treatment tanks 101 to 103. An opening-closing valve V131 is provided in first takeoff flow channel L131. An opening-closing valve V132 is provided in second takeoff flow channel L132. An opening-closing valve V133 is provided in third takeoff flow channel L133. Takeoff flow channels L131 to L133 include a joining flow channel L130 where takeoff flow channels L131 to L133 join each other.

Water vapor supply flow channels L141 to L143 are flow channels for supplying the water vapor for desorbing, from first adsorption materials 101A to 103A, the organic solvent adsorbed by first adsorption materials 101A to 103A, to first treatment tanks 101 to 103.

First water vapor supply flow channel L141 connects a water vapor supply source and first treatment tank 101, and an opening-closing valve V141 is provided in the first water vapor supply flow channel. Second water vapor supply flow channel L142 connects the water vapor supply source and first treatment tank 102, and an opening-closing valve V142 is provided in the second water vapor supply flow channel. Third water vapor supply flow channel L143 connects the water vapor supply source and first treatment tank 103, and an opening-closing valve V143 is provided in the third water vapor supply flow channel.

Organic solvent recovery flow channels L151 to L153 are flow channels for recovering the water vapor (desorbed gas) containing the organic solvent desorbed from first adsorption materials 101A to 103A. Organic solvent recovery flow channels L151 to L153 are connected to first treatment tanks 101 to 103. Organic solvent recovery flow channels L151 to L153 include L150 where organic solvent recovery flow channel L151 to L153 join each other. A condenser 122 is provided in joining flow channel L150. Condenser 122 cools the desorbed gas flowing through joining flow channel L150, to condense the desorbed gas, and discharges a condensed liquid (a mixed liquid of moisture and liquid-phase organic solvent that are generated by the condensation of the desorbed gas).

Separator 120 is provided on the downstream side of condenser 122, and performs the phase separation of the flowing condensed liquid into a liquid phase of separated waste water and a liquid phase of recovered solvent. The recovered solvent is taken to the system exterior of organic solvent recovery apparatus 100. A space (vent gas) where a small amount of organic solvent exists is formed at an upper portion of separator 120.

Resupply flow channel L160 is a flow channel that connects separator 120 and treatment target gas flow channel L110. The vent gas in separator 120 is supplied to first treatment tanks 101 to 103 again, through resupply flow channel L160 and treatment target gas supply flow channel L110.

An effluent treatment facility 500 is a facility that removes the organic solvent contained in the separated waste water. The liquid phase of the separated waste water in separator 120 is supplied, the organic solvent is removed from the separated waste water, and a treated water is discharged to the system exterior. Examples of effluent treatment facility 500 include an aeration facility that vaporizes the organic solvent contained in the separated drainage water by performing the aeration treatment of the separated drainage water and separates the separated drainage water into an aeration gas containing the organic solvent and the treated water. The aeration gas is connected to treatment target gas supply flow channel L110 on the upstream side of cooler C1, through an aeration gas supply flow channel L61. Dehumidification means for removing the moisture in the aeration gas may be provided in aeration gas supply flow channel L61.

Diluent gas supply flow channel L170 is a flow channel for supplying, to coupling flow channels L21 to L23, a diluent gas for promoting the drying of first adsorption materials 101A to 103A after the desorption process. The diluent gas is composed of a gas containing at least one of external gas, instrument air, nitrogen gas or argon gas.

Organic solvent concentrator apparatus 200 is a facility that further removes the organic solvent from the first treated gas discharged from organic solvent recovery apparatus 100. Organic solvent concentrator apparatus 200 includes at least two or more second treatment tanks, and in the description in the case of two second treatment tanks, second treatment tanks 201, 202 include second adsorption materials 201A, 202A capable of adsorbing the organic solvent contained in the first treated gas discharged through joining flow channel L130. In second treatment tank 201, the organic solvent contained in the first treated gas is adsorbed by second adsorption material 201A, and on the other hand, in second treatment tank 202, the organic solvent in the first treated gas adsorbed in second adsorption material 202A is desorbed. In second treatment tanks 201, 202, the adsorption process and the desorption process are performed in sequence while being swapped. By causing the first treated gas to pass through the second treatment tank, it is possible to discharge the second treated gas that is a purified gas in which the organic solvent has been further removed, and after adsorption completion, by causing a smaller gas volume of heated gas than the first treated gas to pass and desorbing the organic solvent adsorbed in the adsorption material, the desorbed gas in which the organic solvent has been concentrated is discharged. The desorbed gas is returned from diluent gas supply flow channel L170 connected to return flow channel L400 to organic solvent recovery apparatus 100.

Second treatment tanks 201, 202 include second adsorption materials 201A, 202A that allow the adsorption of the organic solvent and the desorption of the organic solvent. As second adsorption materials 201A, 202A, there are granular activated carbon and zeolite, honeycomb activated carbon and zeolite, and activated carbon fiber, and a material composed of activated carbon fiber is preferable. Second treatment tanks 201, 202 include opening-closing dampers V201, V202 that switch the supply/non-supply of the treatment target gas to treatment target gas supply ports and opening-closing dampers V201, V202 that switch the discharge/non-discharge of treated gas discharge ports after the passing through second adsorption materials 201A, 202A.

Feed flow channel L300 is a flow channel for feeding the treatment target gas from organic solvent recovery apparatus 100 to organic solvent concentrator apparatus 200. A cooler C2 and heater H2 for adjusting the temperature and humidity of the first treated gas to be introduced into organic solvent concentrator apparatus 200 are provided in feed flow channel L300.

Return flow channel L400 is a flow channel for returning the desorbed gas from organic solvent concentrator apparatus 200 to organic solvent recovery apparatus 100. Return flow channel L400 is connected with diluent gas supply flow channel L170.

Organic solvent concentrator apparatus 200 discharges the second treated gas discharged from second treatment tanks 201, 202, from a purified gas discharge flow channel L220 to the exterior. Further, organic solvent concentrator apparatus 200 includes a connection flow channel L230 and a heater H3.

Connection flow channel L230 connects purified gas discharge flow channel L220 and second treatment tanks 201, 202, so that some of the second treated gas is used for desorption. It is allowable to adopt a configuration in which the external air is used for desorption.

For a damper control required for treatment tank switching in organic solvent recovery apparatus 100 and organic solvent concentrator apparatus 200, an appropriate and adequate apparatus is disposed as necessary.

The organic compound contained in the treatment target gas to be treated by organic solvent recovery system 1 in the embodiment is not particularly limited, and examples thereof include aldehydes such as formaldehyde, acetaldehyde, propionaldehyde and acrolein, ketones such as methyl ethyl ketone, diacetyl, methyl isobutyl ketone and acetone, esters such as 1,4-dioxane, 2-methyl-1,3-dioxolane, 1,3-dioxolane, tetrahydrofuran, methyl acetate, ethyl acetate, propyl acetate and butyl acetate, alcohols such as ethanol, n-propyl alcohol, isopropyl alcohol and butanol, glycols such as ethylene glycol, propylene glycol, diethylene glycol and triethylene glycol, organic acids such as acetic acid and propionic acid, phenols, aromatic organics such as toluene, xylene and cyclohexane, ethers such as diethyl ether and allyl glycidyl ether, nitriles such as acrylic nitrile, organic chlorine compounds such as dichloromethane, 1,2-dichloroethane, trichloroethylene and epichlorohydrin, organic compounds such as N-methyl-2-pyrolidone, dimethylacetamide and N,N-dimethylformamide. The treatment target gas may contain one kind or multiple kinds of them.

### Example

Details of organic solvent recovery system 1 in the present invention described in the above embodiment will be further described using the following example. However, the present invention is not limited to the following example.

### [Example 1]

The following treatment was executed using above-described organic solvent recovery system 1 shown in Fig. 1. For first adsorption materials 101A, 102A, 103A and second adsorption materials 201A, 202A of organic solvent concentrator apparatus 200, activated carbon fibers were used. The activated carbon fiber used for first adsorption materials 101A, 102A, 103A had 3.8 Kg/tank, and the activated carbon fiber used for second adsorption materials 201A, 202A had 3.7 Kg/tank. As an example of the treatment target gas, a 25°C treatment target gas containing 26000 ppm dichloromethane as the organic solvent was used. The designed concentration of dichloromethane that was discharged to the system exterior of the organic solvent recovery system at a gas volume of 5.3 Nm³/min was 5 ppm or lower.

First, in organic solvent recovery apparatus 100, a treated gas was sent to first treatment tank 101 for the first adsorption process, at a gas volume of 5.3 Nm³/min. Subsequently, a first adsorption process outlet gas discharged from first treatment tank 101 was sent to first treatment tank 102 for the second adsorption process, as a second adsorption inlet gas. At this time, the second adsorption inlet gas was adjusted by the diluent gas and the desorbed gas, so as to have 9.5 Nm³/min and 45°C. The gas after the treatment in first treatment tank 102 was discharged as the first treated gas, and was sent to organic solvent concentrator apparatus 200 through feed flow channel L300. At the time point when the dichloromethane concentration of the first adsorption process outlet gas discharged from first treatment tank 101 reached 100 ppm, the processes were switched.

While the first adsorption process was performed in first treatment tank 101 and the second adsorption process was performed in first treatment tank 102, water vapor was introduced into first treatment tank 103 and the desorption process was performed. At this time, white smoke was contained for 1 minute immediately after adsorption tank switching, the temperature of the first treated gas was 60°C, the humidity was 100%, the dichloromethane concentration of the first treated gas after a lapse of 1 minute was 100 ppm, the gas temperature was 45°C, and the humidity was 55%.

The first treated gas discharged from organic solvent recovery apparatus 100 was caused to flow from feed flow channel L300 to second treatment tank 201, the adsorption process was performed, and the second treated gas (purified gas) was discharged. Further, some of the second treated gas was superheated to 130°C by heater H3 in L230, and was supplied to second treatment tank 202, and the desorbed gas was discharged. The whole volume of the desorbed gas was supplied to diluent gas supply flow channel L170 of organic solvent recovery apparatus 100 through return flow channel L400.

The process switching of the first treatment tanks of organic solvent concentrator apparatus 200 was performed at the same time as the process switching of the second treatment tanks of organic solvent recovery apparatus 100. When descriptions are made using a specific example, the switching from the desorption process to the first adsorption process in first treatment tank 101, the switching from the first adsorption process to the second adsorption process in first treatment tank 102, the switching from the second adsorption process to the desorption process in first treatment tank 103, the switching from the adsorption process to the desorption process in second treatment tank 201 and the switching from the desorption process to the adsorption process in second treatment tank 202 were performed at the same time. Each switching was performed at the same time.

In Example 1, the dichloromethane removal ratio was 99%, the coolant utility use amount was 0, and the water vapor use amount was 4 kg/hr.

### [Comparative Example 1]

The same treatment target gas as Example 1 was treated in organic solvent recovery apparatus 100 and organic solvent concentrator apparatus 200, similarly to Example 1. In Comparative Example 1, the process switching of the first treatment tanks of organic solvent recovery apparatus 100 was performed 7 minutes after the start of the adsorption process in organic solvent concentrator apparatus 200, and organic solvent concentrator apparatus 200 was operated so as to switch the processes at the time point when the dichloromethane concentration of the adsorption process outlet gas reached 5 ppm. In Comparative Example 1, the white smoke needed to be cooled and dehumidified to 50°C, for restraining the influence of the white smoke such that the concentration of the outlet gas discharged at a performance equivalent to Example 1, that is, at a removal ratio of 99% was 5 ppm or lower.

In Comparative Example 1, the dichloromethane removal ratio was 99%, the use amount of the cool water utility was 0.3 kg/hr, and the coolant utility use amount was 5.3 kg/hr.

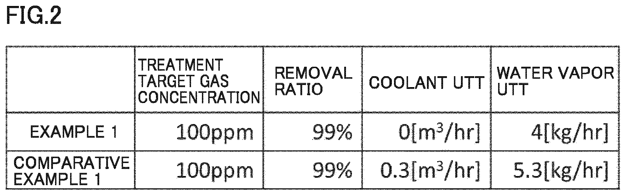

The dichloromethane concentration of the treatment target gas, the removal ratio and the use amount of the cool water utility in Example 1 and Comparative Example 1 are shown in Fig. 2.

From the above description, the following matters are found. Unlike Comparative Example 1, in Example 1, the process switching in each treatment tank is performed at the same time, and thereby, it is possible to secure the layer length of the adsorption material that is not saturated with the organic solvent, against the decrease in the adsorption speed due to the moisture adsorption caused by the white smoke inflow. Therefore, without cooling the white smoke, it is possible to restrain the discharge of the organic solvent in the treatment target gas to the treated gas due to the influence of the white smoke. Further, by the entry of the white smoke shortly after the start of the adsorption process in organic solvent concentrator apparatus 200, the time to dry the adsorption material by the ventilation with the treatment target gas after the white smoke disappears is maximized, and therefore, it is possible to decrease the energy required for the desorption, compared to the related art.

All of the embodiment, variation and example disclosed above are examples, and are not limitative. Further, examples in which the embodiment, the variation and the example are appropriately combined are also included in the category of the present invention. That is, the technical scope of the present invention is effective by the claims, and includes all modifications, alterations, replacements and others within a meaning and range equivalent to the description in the claims.

### INDUSTRIAL APPLICABILITY

The organic solvent recovery system in the present invention concurrently operates the process switching in the treatment tank of the organic solvent recovery apparatus and the treatment tank of the organic solvent concentrator apparatus, and thereby, it is possible to decrease the cooling cost for white smoke prevention and the water vapor amount required to desorption, compared to the related art. Consequently, it is possible to greatly contribute to the industrial world.

### REFERENCE SIGNS LIST

1: Organic solvent recovery system
100: Organic solvent recovery apparatus
101 to 103: First treatment tank
101A to 103A: First adsorption material
110: Supply flow channel
120: Separator
200: Organic solvent concentrator apparatus
201, 202: Second treatment tank
201A, 202A: Second adsorption material
500: Effluent treatment facility
H1 to H3: Heater
C1, C2: Cooler
L110: Treatment target gas supply flow channel
L121 to L123: Coupling flow channel
L130: Joining flow channel
L131 to L133: Takeoff flow channel
L140: Water vapor supply flow channel
L151 to L153: Organic solvent recovery flow channel
L160: Resupply flow channel
L170: Diluent gas supply flow channel
L230: Connection flow channel
L300: Feed flow channel
L400: Return flow channel
V111 to V113, V121 to V123, V131 to V133, V141 to V143: Opening-closing valve
V101 to V106, V201 to V203: Opening-closing damper

## Claims

1. An organic solvent recovery system comprising: three or more first treatment tanks that are filled with a first adsorption material capable of adsorbing and desorbing an organic solvent; a water vapor supply flow channel through which water vapor is introduced; a coupling flow channel that connects a plurality of the first treatment tanks in a series multi-stage configuration; and a treatment target gas supply flow channel through which a treatment target gas containing the organic solvent is supplied, and comprising:
an organic solvent recovery apparatus that performs an adsorption treatment of the organic solvent contained in the supplied treatment target gas in the plurality of the first treatment tanks of all of the first treatment tanks that is connected in the series multi-stage configuration, discharges a first treated gas, and performs a desorption treatment of the adsorbed organic solvent in a remaining first treatment tank using the introduced water vapor, all of the first treatment tanks continuously performing the adsorption treatment and the desorption treatment with switching between the adsorption treatment and the desorption treatment; and
an organic solvent concentrator apparatus including second treatment tanks that are filled with a second adsorption material capable of adsorbing and desorbing the organic solvent and a feed flow channel through which the first treated gas is supplied to the second treatment tanks, an adsorption treatment and a desorption treatment of the organic solvent contained in the first treated gas being continuously performed with switching between the adsorption treatment and the desorption treatment,
wherein the switching between the desorption treatment and the adsorption treatment in the first treatment tanks and the switching between the desorption treatment and the adsorption treatment in the second treatment tanks are performed at the same time.

2. The organic solvent recovery system according to claim 1, comprising:
a diluent gas supply flow channel through which a diluent gas is supplied to the coupling flow channel; and
a return flow channel through which a desorbed gas discharged by the desorption treatment in the second treatment tanks is returned to the diluent gas supply flow channel.

3. The organic solvent recovery system according to claim 1 or 2, comprising: a connection flow channel through which some of a second treated gas discharged by the adsorption treatment in the second treatment tanks is introduced for the desorption treatment in the second treatment tanks; and a heating device that is provided in the connection flow channel.

4. The organic solvent recovery system according to any one of claims 1 to 3, wherein the second adsorption material is composed of a material containing at least one of granular activated carbon, activated carbon fiber or zeolite.

5. The organic solvent recovery system according to any one of claims 1 to 4, wherein heated air is used for the desorption by the second adsorption material.
